# FASCICULE DE BREVET EUROPEEN

(11) **EP 1 655 096 B1**
(45) Date de publication et mention de la délivrance du brevet: **23.04.2008**
(21) Numéro de dépôt: 05300842.1
(22) Date de dépôt: 21.10.2005
(51) Int. Cl.: B23K 9/167, B23K 9/29, B23K 10/02

(54) **Installation de soudage à l'arc comprenant plusieurs torches de soudage à l'arc de type double flux, chacune avec une électrode non consommable adaptée au soudage de tubes, où la pointe de l'électrode se situant dans le plan de la buse interne**
Lichtbogenschweissanlage mit mehreren Brennern mit nichtabschmelzender Elektrode und Zweifach-Fluxschutz für Rohrschweissen, jeder brenner mit der in dem Plan der inneren Düse liegenden Elektrodespitze
Installation for arc welding with several torches using a non-consumable electrode and double protective flux for welding tubes, each torch having the electrode tip located in the plane of the inner nozzle

(30) Priorité: 09.11.2004 FR 0452567
(43) Date de publication de la demande: 10.05.2006
(73) Titulaire: AIR LIQUIDE WELDING FRANCE, 75321 Paris Cedex 07 (FR)
(72) Inventeur: Morvan, Gérard, 79450 Saint Aubin Le Cloud (FR); Painsard, Hervé, 79600 Borcq aur Airvault (FR)
(74) Mandataire: Pittis, Olivier

(56) Documents cités:
- EP-A- 1 459 830
- GB-A- 866 575
- GB-A- 1 476 980
- US-A- 2 806 124
- US-A- 6 054 667
- PATENT ABSTRACTS OF JAPAN vol. 1996, no. 02, 29 février 1996 (1996-02-29) -& JP 07 256463 A (HITACHI SEIKO LTD), 9 octobre 1995 (1995-10-09)
- PATENT ABSTRACTS OF JAPAN vol. 1995, no. 01, 28 février 1995 (1995-02-28) -& JP 06 277847 A (JAPAN NUCLEAR FUEL CO LTD <JNF>), 4 octobre 1994 (1994-10-04)

## Description

L'invention concerne une installation de soudage à l'arc comprenant plusieurs torches de soudage à l'arc à double flux comprenant une électrode en tungstène dont l'extrémité pointue se situe dans ou approximativement dans le même plan que celui formé par le rebord périphérique d'extrémité de la buse interne, et son utilisation pour le soudage longitudinal de tubes ou similaires.

Lors de la réalisation de soudures longitudinales de tubes en acier au carbone ou en acier inoxydable, en particulier de tubes destinés à être utilisés comme mâts ou poteaux notamment pour l'éclairage qui sont appelés « candélabres », les épaisseurs à souder sont généralement de l'ordre de 2.5 à 4 mm, au niveau du plan de joint, c'est-à-dire là où les deux bords à souder se rejoignent et doivent être assemblés par soudage.

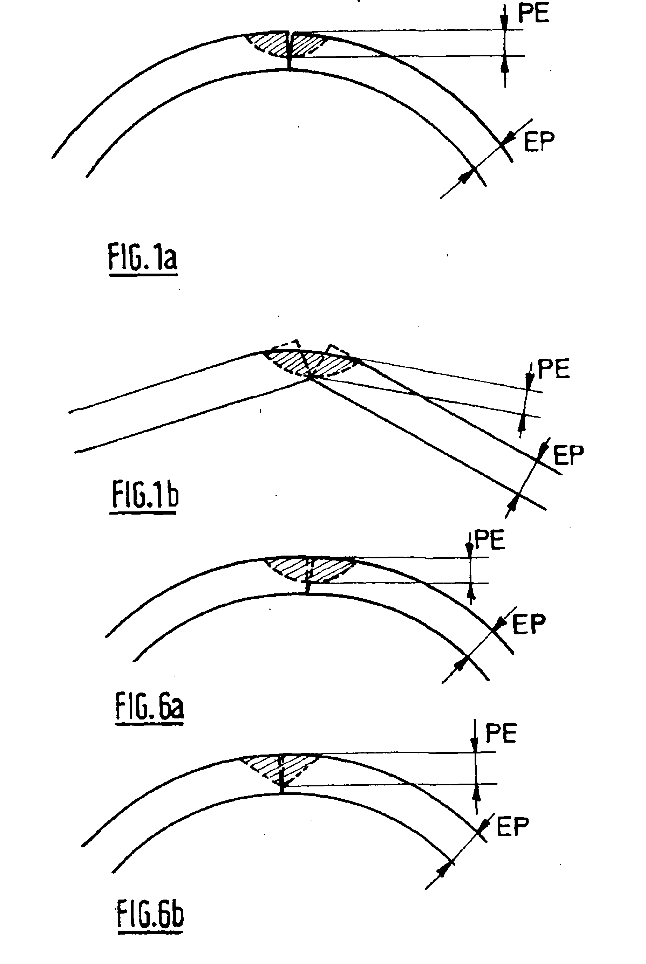

Les Figures 1a et 1b schématisent des préparations de pièces à souder pour former de tels tubes, à savoir une pièce cylindrique ou cylindroconique en position bord à bord sur la Figure 1a, et une pièce polygonale, par exemple octogonale, en position de soudage formant un 'V' sur la figure 1b.

Comme illustré sur ces Figures 1a et 1b, pour des pièces ayant une épaisseur (EP) égale à 4 mm, la pénétration (PE) désirée doit être généralement de 2.4 mm minimum afin d'obtenir une tenue mécanique suffisante du tube ainsi obtenu, en particulier lorsqu'il est destiné à être utilisé comme poteau de support.

En effet, le rapport PE/EP de la pénétration PE à l'épaisseur EP qui est couramment demandé pour répondre aux contraintes d'utilisation doit être égal ou supérieur à 60% (soit 2.4 mm/4 mm =60 %).

Un tel soudage est habituellement obtenu par soudage, à savoir le soudage à haute fréquence ou par soudage à l'arc submergé (AS). Or, ces procédés présentent des inconvénients.

Ainsi, le procédé de soudage AS rend obligatoire l'utilisation d'un métal d'apport et de flux de soudage, ce qui n'est pas pratique au plan industriel.

Les vitesses atteintes industriellement avec un procédé AS sont de l'ordre de 2 m/mm pour des épaisseurs de tube de 4 mm en bord à bord, ce qui est compatible avec des cadences de production élevées, alors que celles pouvant être atteintes en soudage haute fréquence soient très supérieures aux précédentes mais la mise en oeuvre de ce procédé est très onéreuse, donc peu répandue dans l'industrie.

Par ailleurs, les tubes soudés sont la plupart du temps subséquemment revêtus par galvanisation au zinc à chaud.

Or, l'esthétique du revêtement est altérée par le bourrelet visible extérieurement résultant d'un soudage AS et de surcroît par une différence d'aspect du revêtement de zinc sur la soudure, du fait de la nature métallurgique différente du fil d'apport.

Pour pallier ces inconvénients, il a été déjà proposé de souder de tels assemblages en mettant en oeuvre des procédés de soudage à l'arc plasma ou de soudage TIG (pour Tungsten Inert Gas).

Le document JP-A-07,256463 enseigne une torche de soudage à l'arc plasma ou de soudage TIG comprenant une électrode localisée à l'intérieur de la tuyère interne mais pouvant faire saillie au-delà du rebord périphérique de la tuyère interne de manière à ce que la distance entre l'électrode et la pièce à souder soit comprise entre 1 et 6 mm.

Par ailleurs, le document US-A-2,806,124 enseigne la mise en oeuvre d'une torche de soudage à l'arc comprenant une électrode en tungstène et une tuyère en cuivre, caractérisée en ce que l'électrode est située entièrement à l'intérieure de la tuyère et en ce que la forme de la tuyère est choisie en fonction de l'épaisseur de la pièce à souder.

Dans ce cas, la soudure ne présente plus de bourrelet, ni de différence de composition du métal fondu puisque aucun métal d'apport n'est nécessaire avec ces types de procédés, ce qui améliore l'esthétique de la soudure du tube soudé et subséquemment galvanisé ainsi obtenu.

Cependant, le soudage à l'arc, qu 'il soit plasma ou TIG, est un procédé lent lorsqu'il est utilisé avec une seule torche de soudage puisque des vitesses maximales de l'ordre de seulement 10 à 30 cm/min peuvent être atteintes, ce qui est souvent nettement insuffisant au plan Industriel.

Une amélioration notable a été proposée, laquelle est basée sur un soudage TIG multi-cathodes, c'est-à-dire mettant en oeuvre plusieurs arcs électriques alignés selon le plan de à réaliser de sorte que chaque zone de la soudure soit soumise successivement aux différents arcs électriques. Ce type de soudage est enseigné dans le document US-A-6,054,667, le document représentant l'état de la technique le plus proche.

Ainsi, un procédé TIG multi-cathodes avec double flux de gaz de protection a déjà été appliqué pour opérer un soudage à grande vitesse de tube en acier inoxydable ayant des épaisseurs compris entre environ 1 et 2 mm.

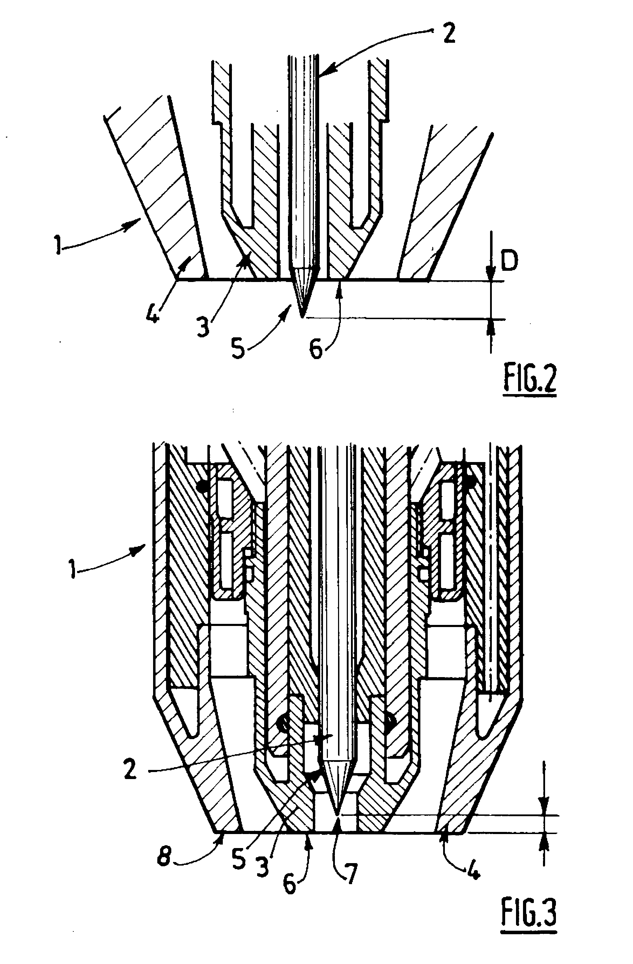

La figure 2 montre une configuration classique de la partie active d'une des torches TIG servant à réaliser un tel soudage multi-cathodes sous double flux gazeux. Comme on le voit, une telle torche 1 de soudage à l'arc TIG comprenant une électrode 2 en tungstène avec extrémité 5 active pointue, où se forme l'arc électrique. L'électrode 2 est entourée par une tuyère interne 3 et une tuyère externe 4. Des flux de gaz central, généralement un gaz inerte, et périphérique circulent, respectivement, entre l'électrode et la tuyère interne 3, et entre les deux tuyères interne 3 et externe 4, avant d'être expulsés en direction de la soudure. Dans ce cas, l'extrémité active pointue 5 de l'électrode fait toujours saillie au delà du rebord périphérique 6 de la tuyère interne 3, c'est-à-dire que l'extrémité 5 de l'électrode 2 émerge de la tuyère interne 3 d'une longueur D typiquement de l'ordre de 4 mm environ, comme cela est divulgué dans le document EP-A-1,459,830

Afin d'améliorer ce procédé multi-électrodes, Il a été proposé de remplacer les arcs TIG par des arcs plasma. En effet, le soudage à l'arc plasma présente plusieurs avantages par rapport à un soudage à l'arc TIG.

Le premier avantage d'un arc plasma est qu'il est plus 'chaud' qu'un arc TIG et qu'il permet donc d'atteindre des performances de fusion supérieures et donc d'épaisseurs plus importantes.

Un autre avantage important, comme représenté en Figure 3, est que, dans une torche 1 à plasma, l'électrode 2 en tungstène portée à haute température est mieux protégée de l'oxydation, en particulier de l'oxygène de l'air ambiant, et des oxydes et projections métalliques du métal en fusion situé à proximité, en particulier lors du soudage d'un acier au carbone, puisque l'électrode 2 est située à l'Intérieur de la tuyère interne 3 de la torche à plasma.

Un autre avantage encore d'une torche plasma est que l'on peut appliquer un arc pilote entre l'électrode en tungstène et la tuyère. Cet arc est amorcé au départ par étincelle haute tension/haute fréquence, en présence du gaz central qui est typiquement de l'argon, et cet arc pilote est maintenu en fonctionnement avant l'amorçage de l'arc principal de soudage. Ainsi, l'amorçage de l'arc principal de soudage sur la pièce à souder se fait instantanément, sans nécessiter d'étincelle haute tension/haute fréquence, à chaque début de soudure, ce qui évite les perturbations électromagnétiques sur les organes de pilotage de la machine. Ensuite, juste après amorçage de l'arc principal, et pendant le soudage, le gaz central peut être utilement remplacé par un autre gaz mieux adapté à la fusion de l'acier au carbone, comme par exemple le mélange gazeux de type argon/hydrogène commercialisé par L'Air Liquide sous la dénomination NOXAL 4™.

De façon générale, la mise en oeuvre simultanée de plusieurs arcs électriques, avec des torches TIG ou plasma, permet d'améliorer les performances de soudage, notamment la vitesse de soudage et la qualité esthétique du cordon, étant donné que :
- une torche permet de préchauffer le métal et de lui faire subir une fusion partielle en surface.
- une autre torche permet de terminer la fusion et d'assurer la pénétration de soudage recherchée.
- une torche supplémentaire, dite torche de lissage, peut éventuellement être ajoutée à la suite des deux autres pour re-fusionner, mais en surface seulement, la surface visible du cordon pour améliorer l'aspect de la zone fondue.

Toutefois, en pratique, il est apparu des difficultés dues aux déviations d'arcs causées par des interactions entre eux des arcs électriques mis en oeuvre lors du soudage avec une telle installation multi-électrodes.

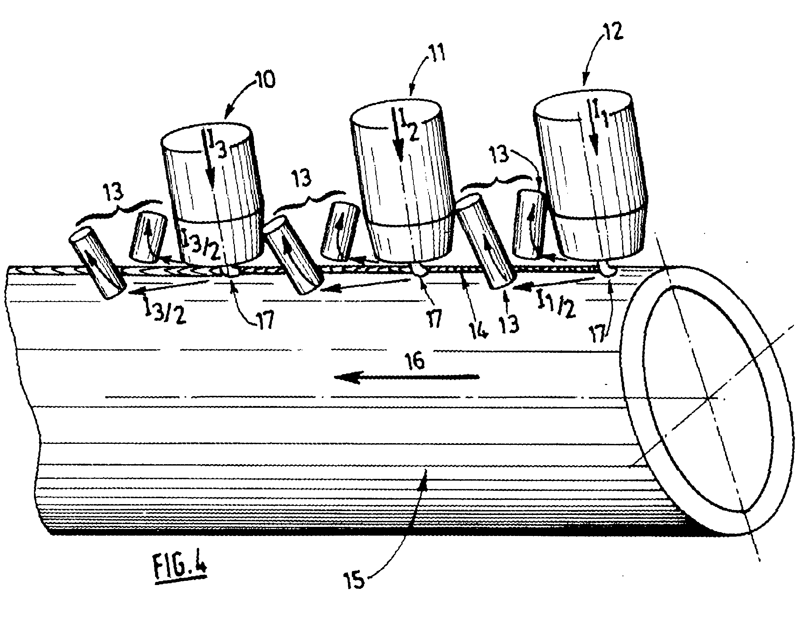

Pour les résoudre, il a été proposé de faire circuler, d'une manière particulière, le courant électrique de retour de chaque arc dans le métal du tube, c'est-à-dire en disposant des frotteurs ou prises de masses derrière chaque torche de soudage, comme illustré sur la figure 4, qui représente une installation de soudage à trois torches 10, 11, 12 alignées de manière à réaliser un joint de soudage 14, chaque torche étant associée à des prises de masse 13 située en aval du point d'impact de chaque arc sur le tube 15, le sens de déplacement du tube 15 à souder par rapport aux torches, qui sont fixes, étant indiqué par la flèche 16. Comme on le voit, les arcs électriques 17 sont déviés volontairement vers l'avant de manière à améliorer leur stabilité.

Comme on le voit sur la figure 3, dans une torche à arc plasma, l'extrémité 7 de l'électrode 2 est localisée à l'intérieur de la tuyère interne 3, ce qui implique que l'arc électrique généré, pendant le soudage, entre l'électrode et la ou les pièces à souder est relativement long, c'est-à-dire typiquement de plus de 5 ou 6 mm.

Or, on comprend aisément que plus l'arc est long, plus les phénomènes de déviation d'arcs susmentionnés perturbent la stabilité des arcs.

Les perturbations électromagnétiques et donc les déviations intempestives d'arcs sont d'autant plus importantes que l'intensité est élevée, de sorte que, dès que l'intensité du courant continu principal de soudage dépasse 320 ampères, les arcs ne sont plus suffisamment stables pour une application industrielle, en particulier pour le soudage des tubes en acier au carbone ayant une épaisseur de l'ordre 3 et 4 mm.

Parce que l'on ne peut pas dépasser facilement l'intensité de soudage de 320 ampères, les vitesses de soudage sont donc limitées par le procédé lui même autour de 1.5 à 1.7 m/mm pour des tubes d'épaisseur 4 mm, lorsqu'on souhaite une pénétration de soudure d'environ 2.4 à 2.5 mm.

On constate par ailleurs l'apparition de soufflures en surface de cordon qui sont très préjudiciables à l'esthétique de la soudure et à la tenue mécanique de l'assemblage. Ces défauts sont probablement imputables à une insuffisante protection gazeuse du bain de fusion qui est très allongé, de l'ordre de plusieurs cm derrière la dernière torche, associée à un « affouillement » du bain de métal fondu, sous la pression combinée de l'arc électrique et du gaz plasmagène, lesquels font remonter et surgir les impuretés du métal, et les oxydes métalliques à haute température.

Le problème qui se pose est d'améliorer les installations multi-électrodes et procédés de soudage à l'arc existants de manière à éviter ou minimiser les phénomènes de soufflures du cordon et d'augmenter sensiblement la vitesse de soudage, c'est-à-dire de proposer une installation de soudage améliorée mettant en oeuvre des torches présentant les avantages des torches à plasma mais pas leurs inconvénients, laquelle installation puisse permettre le soudage des tubes destinés à être utilisés en tant que poteaux ou mâts-supports.

La solution de l'invention est une installation de soudage à l'arc comprenant plusieurs torches de soudage à l'arc telles que définie dans la revendication 1. Cette installation comprend plusieurs torches, chacune comprenant chacune une électrode en tungstène avec une extrémité pointue, une tuyère interne entourant l'électrode et une tuyère externe entourant ladite tuyère interne, le rebord annulaire d'extrémité de la tuyère interne et la pointe de l'électrode étant sensiblement situés dans un même plan.

Selon l'invention, la distance d séparant un premier plan P perpendiculaire à l'axe longitudinal de l'électrode et passant au niveau de la surface du rebord annulaire situé à l'extrémité de la tuyère interne, d'un second plan P' passant par l'extrémité pointue de l'électrode et qui est parallèle au premier plan P est telle que : 0 ≤ d < 1 mm, et la tuyère interne a un orifice de sortie de diamètre compris entre 5.3 et 7 mm.

Selon le cas, l'installation de l'invention peut comprendre l'une ou plusieurs des caractéristiques suivantes :
- la distance d séparant un premier plan P perpendiculaire à l'axe longitudinal de l'électrode et passant au niveau de la surface du rebord annulaire situé à l'extrémité de la tuyère interne, d'un second plan P' passant par l'extrémité pointue de l'électrode qui est parallèle au premier plan P est telle que : d < 0.5 mm, de préférence est égale à 0 mm.
- la tuyère interne a un orifice de sortie de diamètre compris entre 5.7 et 6,5 mm.
- la tuyère interne a un orifice de sortie de diamètre de l'ordre de 6 mm. De préférence, l'installation comprend de 2 à 5 torches alignées.

L'invention porte en outre sur un procédé de soudage à l'arc électrique d'une ou plusieurs pièces métalliques, en particulier des deux bords longitudinaux d'un tube, dans lequel on met en oeuvre une installation selon l'invention.

Selon le cas, le procédé de l'invention peut comprendre l'une ou plusieurs des caractéristiques suivantes :
- on applique un courant de soudage ayant une intensité comprise entre 120 et 250 ampères, sur la dernière torche de soudage.
- on soude ensemble les deux bords longitudinaux d'un tube, notamment d'un tube cylindrique ou polygonal.
- on opère un soudage dont la pénétration (PE) de la soudure est supérieure ou égale à 60% de l'épaisseur (EP) de la ou des pièces à souder ensemble.
- l'épaisseur de la ou des pièces souder ensemble est comprise entre 2 et 6 mm, de préférence entre 2.5 à 4 mm.
- la ou les pièces à souder ensemble sont en acier au carbone.
- la vitesse de soudage est d'au moins 2 m/min.

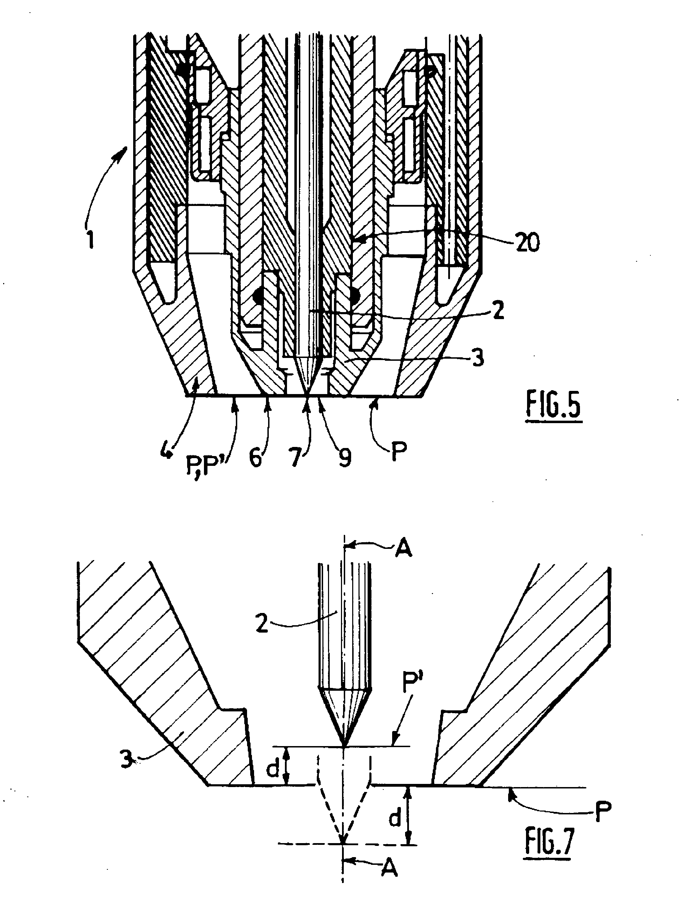

En d'autres termes, la solution de l'invention, illustrée sur la figure 5, repose donc sur un compromis entre les deux configurations d'extrémités de torches connues, à savoir la configuration « TIG double flux », d'une part, et la configuration « plasma », d'autre part.

Plus précisément, selon l'invention, l'extrémité ou pointe 7 active de l'électrode 2 est non pas dépassante comme dans une torche TIG à double flux (Fig. 2), ni interne comme dans une torche à plasma (Fig. 3), mais affleurante de l'extrémité du canon de centrage faisant office de tuyère ou buse interne 3 de la torche.

Autrement dit, l'extrémité de la pointe 7 de l'électrode 2 est sensiblement située dans le même plan P que le rebord 6 annulaire situé à l'extrémité de la buse interne 3, c'est à dire le rebord annulaire 6 entourant l'orifice de sortie 9 du gaz distribué par la buse interne 3.

Dans le cadre de la présente invention, par "sensiblement située dans un même plan", on entend que la distance d séparant le plan P perpendiculaire à l'axe longitudinal de l'électrode 2 et passant au niveau de la surface du rebord 6 annulaire situé à l'extrémité de la tuyère interne 3, du plan P' passant par l'extrémité pointue 7 de l'électrode 2 et qui est parallèle au plan P est telle que 0 ≤ d < +/- 1 mm, de préférence d < +/- 0.5 mm, ou dit autrement la pointe de l'électrode peut se trouver à une distance d inférieure ou égale à 1 mm de part ou d'autre dudit plan P, de préférence à une distance d inférieure ou égale à 0.5 mm de part ou d'autre dudit plan (au dessus ou au dessous du plan P), et préférentiellement encore aussi près que possible du plan P (i.e. d=0), comme schématisé en figure 7.

De préférence, on utilise une buse interne 3 dont l'orifice de sortie 9 a un diamètre de 6 mm environ. L'électrode 2 peut, quant à elle, avoir un diamètre de 4 mm.

En effet, pour permettre de réaliser un soudage efficace et de qualité, il est indispensable que la tuyère interne 3 ait un orifice de sortie de diamètre compris entre 5.3 et 7 mm.

Un premier flux de gaz non-oxydant est distribué par la buse centrale 3, lequel flux entre en contact avec l'électrode en tungstène, et un deuxième flux de gaz, oxydant, non oxydant, inerte ou réducteur, est distribué par la buse externe périphériquement ou annulairement au premier flux de gaz. Le choix des gaz se fait de manière classique, notamment en fonction de la nature du matériau à souder.

La solution de l'invention présente les avantages suivants :
- l'électrode 2 est bien protégée de l'oxydation et des oxydes métalliques, d'où il résulte une meilleure durée de vie entre deux affûtages.
- on peut générer un arc pilote entre l'électrode 2 et le canon de centrage ou tuyère interne 3, afin d'ioniser le gaz central et créer ainsi facilement un arc pilote. On oblige alors l'arc pilote à « s'accrocher » à l'extrémité 7 de l'électrode 2 en tungstène grâce à la présence d'un canon isolant 20, en alumine par exemple, de manière à faciliter l'allumage de l'arc principal instantanément au début de chaque soudure.
- la protection gazeuse des bains de soudures successifs est améliorée grâce au dimensionnement de l'alésage de sortie de la tuyère 3 interne, lequel est de préférence de l'ordre de 6 mm, et plus généralement compris entre 5.3 et 7 mm.

En effet, avec de tels dimensionnements, les arcs sont plus stables qu'avec une torche à plasma classique pour laquelle l'orifice 9 a généralement un diamètre de 3 à 5 mm ; les soufflures disparaissent ; on peut appliquer des intensités plus élevées de 10 % environ sur les torches, c'est-à-dire de 350 à 370 A, et des tensions d'arcs plus faibles de 10 % environ, c'est-à-dire environ 27 V ; et la forme de la pénétration de la zone fondue permettent de diminuer la sensibilité à son effondrement, comme schématisé sur les Figures 6a et 6b, pour une même préparation en bord à bord lors du soudage d'un tube cylindrique.

Des essais comparatifs de soudage d'un tube ont été effectués avec une torche selon l'invention analogue à celle de la Figure 5 et, à titre comparatif, avec une torche à plasma classique analogue à celle de la Figure 3.

Le tube à souder a une épaisseur de 4 mm, est en acier au carbone de même composition, est mis en position en bord à bord (pré-tube de forme cylindrique).

La pénétration de soudage voulue dans les deux cas est de 2.4 mm, soit un rapport PE/EP=60 %.

Les résultats obtenus montrent que la vitesse de soudage est augmentée de 30 à 40 % avec la torche selon l'invention puisqu'on a obtenu une vitesse de soudage de 2 à 2.4 m/min avec la torche de l'invention contre seulement 1.5 à 1.7 m/mn avec la torche à plasma classique, toutes les autres conditions de soudage étant égales par ailleurs : nature des gaz utilisés, voltage, intensité...

Dans le cas particulier du soudage d'un tube en acier au carbone, lequel est destiné à être utilisé en tant que poteau ou mât de portage, pour obtenir une soudure de bel aspect esthétique, il a été constaté qu'il est recommandé d'utiliser une installation portant trois torches selon l'invention alignées selon le plan de joint à souder et auxquelles sont appliquées des intensités croissantes, par exemple 300 A pour la première torche, 320 A pour la deuxième torche et 350 A pour la troisième torche.

En outre, les distances entre les torches, c'est-à-dire entre les arcs, doivent être les plus faibles possibles, c'est-à-dire de l'ordre de 60 mm environ.

Une quatrième torche peut être utilement utilisée pour re-fusionner en surface la soudure afin d'améliorer l'aspect. Une intensité de 150 à 220 A sous 25 à 30 V est suffisante. Cette quatrième torche, dite de lissage de la soudure, est placée à une distance supérieure aux autres, c'est-à-dire environ 120 à 200 mm derrière la troisième torche, de façon à laisser refroidir suffisamment le métal soudé, avant de faire subir à la soudure une refusion de surface par ce quatrième arc.

Un faible apport de métal de même composition chimique que le métal de base, sous forme de fil d'apport fondu sous l'arc électrique de soudage, peut être utile également, afin de combler un léger déficit de matière selon la qualité de la préparation des bords de la pièce à souder.

Dans le cadre de l'invention, il est aussi primordial que les torches mises en oeuvre dans l'installation aient une configuration « double flux », c'est-à-dire avec buse centrale et buse périphérique, car l'une des tuyères est utilisée pour créer un arc pilote d'amorçage entre l'électrode en tungstène et ladite tuyère, et ainsi obtenir un amorçage immédiat de l'arc principal de soudage.

Ceci est primordial car, lorsqu'on met en oeuvre plusieurs torches de soudage, pour souder un tube par exemple, et lorsque le premier arc principal est amorcé, la pièce à souder est généralement déjà mise en mouvement relatif par rapport aux torches, et Il faut alors pouvoir amorcer à coup sûr les arcs suivants pour assurer un soudage efficace du tube.

Or, un tel avantage n'existerait avec une torche TIG mono flux classique ou une torche TIG double flux standard, dans lesquelles on amorce l'arc principal par un système haute fréquence, ce qui ne garantit pas des amorçages réussis à 100%.

## Revendications

1. Installation de soudage à l'arc comprenant plusieurs torches (1) de soudage à l'arc comprenant chacune une électrode (2) en tungstène avec une extrémité (5) pointue (7), **caractérisée en ce que** chaque torche (1) comprend une tuyère interne (3) entourant l'électrode (2) et une tuyère externe (4) entourant ladite tuyère interne (3), le rebord (6) annulaire d'extrémité de la tuyère interne (3) et la pointe (7) de l'électrode (5) sont sensiblement situés dans un même plan où la distance (d) séparant un premier plan (P) perpendiculaire à l'axe longitudinal de l'électrode (2) et passant au niveau de la surface du rebord (6) annulaire situé à l'extrémité de la tuyère interne (3), d'un second plan (P') passant par l'extrémité pointue (7) de l'électrode (2) et qui est parallèle et situé au dessus ou au dessous au premier plan (P) est telle que : 0 ≤ d 1 mm, et la tuyère interne (3) a un orifice de sortie de diamètre compris entre 5.3 et 7 mm.

2. Installation selon la revendication 1, **caractérisée en ce que** la distance (d) entre les premier et deuxième plans (P, P') est telle que : d < 0.5 mm.

3. Installation selon la revendication ou 2, **caractérisée en ce que** la tuyère interne (3) a un orifice de sortie de diamètre compris entre 5.7 et 6,5 mm, de préférence de l'ordre de 6 mm.

4. Installation selon l'une des revendications 1 à 3 **caractérisé en ce qu'**elle comprend de 2 à 5 torches (1) alignées.

5. Procédé de soudage à l'arc électrique d'une ou plusieurs pièces métalliques, en particulier des deux bords longitudinaux d'un tube, dans lequel on met en oeuvre une installation selon l'une des revendications 1 à 4.

6. Procédé selon la revendication 5, **caractérisé en ce qu'**on applique un courant de soudage ayant une intensité comprise entre 120 et 250 ampères, sur la dernière torche de soudage.

7. Procédé selon les revendications 5 ou 6 **caractérisé en ce qu'**on soude ensemble les deux bords longitudinaux d'un tube, notamment d'un tube cylindrique ou polygonal.

8. Procédé selon les revendications 5 à 7, **caractérisé en ce qu'**on opère un soudage dont la pénétration (PE) de la soudure est supérieure ou égale à 60% de l'épaisseur (EP) de la ou des pièces à souder ensemble.

9. Procédé selon les revendications 5 à 8, **caractérisé en ce que** l'épaisseur de la ou des pièces à souder ensemble est comprise entre 2 et 6 mm, de préférence entre 2.5 à 4 mm.

10. Procédé selon les revendications 5 à 9, **caractérisé en ce que** la ou les pièces à souder ensemble sont en acier au carbone.

11. Procédé selon les revendications 5 à 10, **caractérisé en ce que** la vitesse de soudage est d'au moins 2 m/min.

## Claims

1. Arc welding installation comprising several arc welding torches (1) each comprising a tungsten electrode (2) with an end (5) having a tip (7), **characterized in that** each torch (1) comprises an inner nozzle (3) surrounding the electrode (2) and an outer nozzle (4) surrounding said inner nozzle (3), the annular end rim (6) of the inner nozzle (3) and the tip (7) of the electrode (5) all lie substantially in the same plane, in which the distance (d) separating a first plane (P) perpendicular to the longitudinal axis of the electrode (2) and passing through the surface of the annular rim (6) located at the end of the inner nozzle (3) from a second plane (P') passing through the tip (7) of the electrode (2), which second plane is parallel to and lies above or below said first plane (P), is such that: 0 ≤ d < 1 mm, and the inner nozzle (3) has an outlet orifice with a diameter between 5.3 and 7 mm.

2. Installation according to Claim 1, **characterized in that** the distance (d) between the first and second planes (P, P') is such that: d < 0.5 mm.

3. Installation according to Claim 1 or 2, **characterized in that** the inner nozzle (3) has an outlet orifice with a diameter between 5.7 and 6.5 mm, preferably around 6 mm.

4. Installation according to one of Claims 1 to 3, **characterized in that** it comprises 2 to 5 aligned torches (1).

5. Electric arc welding process for welding one or more metal workpieces, in particular two longitudinal edges of a tube, in which an installation according to one of Claims 1 to 4 is employed.

6. Process according to Claim 5, **characterized in that** a welding current having an intensity of between 120 and 250 amps is applied on the last welding torch.

7. Process according to either of Claims 5 and 6, **characterized in that** the two longitudinal edges of a tube, especially a cylindrical or polygonal tube, are welded together.

8. Process according to Claims 5 to 7, **characterized in that** a welding operation is carried out in which the penetration depth (PE) of the weld is equal to or greater than 60% of the thickness (EP) of the workpiece or workpieces to be welded together.

9. Process according to Claims 5 to 8, **characterized in that** the thickness of the workpiece or workpieces to be welded together is between 2 and 6 mm, preferably between 2.5 and 4 mm.

10. Process according to Claims 5 to 9, **characterized in that** the workpiece or workpieces to be welded together are made of carbon steel.

11. Process according to Claims 5 to 10, **characterized in that** the welding rate is at least 2 m/min.

## Patentansprüche

1. Lichtbogenschweißanlage mit mehreren Lichtbogenschweißbrennern (1), die jeweils eine Elektrode (2) aus Wolfram mit einem spitz zulaufenden (7) Ende (5) aufweisen, **dadurch gekennzeichnet, dass** jeder Brenner eine innere Düse (3), welche die Elektrode (2) umgibt, und eine äußere Düse (4), welche die innere Düse (3) umgibt, aufweist, wobei der ringförmige Rand (6) des Endes der inneren Düse (3) und die Spitze (7) der Elektrode (5) sich im Wesentlichen in ein und derselben Ebene befinden, wobei der Abstand (d), der eine erste Ebene (P), die zur Längsachse der Elektrode (2) senkrecht ist und auf der Höhe der Oberseite des am Ende der inneren Düse (3) befindlichen ringförmigen Randes (6) verläuft, von einer zweiten Ebene (P') trennt, die durch das spitz zulaufende Ende (7) der Elektrode (2) verläuft und die parallel zu der ersten Ebene (P) und über oder unter dieser befindlich ist, derart ist, dass gilt: 0 ≤ d < 1 mm, und die innere Düse (3) eine Austrittsöffnung mit einem Durchmesser aufweist, der zwischen 5,3 und 7 mm liegt.

2. Anlage nach Anspruch 1, **dadurch gekennzeichnet, dass** der Abstand (d) zwischen der ersten und der zweiten Ebene (P, P') derart ist, dass gilt: d < 0,5 mm.

3. Anlage nach Anspruch 1 oder 2, **dadurch gekennzeichnet, dass** die innere Düse (3) eine Austrittsöffnung mit einem Durchmesser aufweist, der zwischen 5,7 und 6,5 mm liegt, vorzugsweise ungefähr bei 6 mm.

4. Anlage nach einem der Ansprüche 1 bis 3, **dadurch gekennzeichnet, dass** sie 2 bis 5 aneinander gereihte Brenner (1) aufweist.

5. Verfahren zum elektrischen Lichtbogenschweißen eines oder mehrerer Metallteile, insbesondere von zwei Längsrändern eines Rohres, bei welchem eine Anlage nach einem der Ansprüche 1 bis 4 eingesetzt wird.

6. Verfahren nach Anspruch 5, **dadurch gekennzeichnet, dass** ein Schweißstrom mit einer Stromstärke, die zwischen 120 und 250 Ampere beträgt, an den letzten Schweißbrenner angelegt wird.

7. Verfahren nach den Ansprüchen 5 oder 6, **dadurch gekennzeichnet, dass** die zwei Längsränder eines Rohres zusammengeschweißt werden, insbesondere eines zylindrischen oder polygonalen Rohres.

8. Verfahren nach den Ansprüchen 5 bis 7, **dadurch gekennzeichnet, dass** eine Schweißung durchgeführt wird, bei welcher der Einbrand (PE) der Schweißnaht größer oder gleich 60% der Dicke (EP) des Teils oder der Teile ist, die zusammenzuschweißen sind.

9. Verfahren nach den Ansprüchen 5 bis 8, **dadurch gekennzeichnet, dass** die Dicke des Teils oder der Teile, die zusammenzuschweißen sind, zwischen 2 und 6 mm beträgt, vorzugsweise zwischen 2,5 und 4 mm.

10. Verfahren nach den Ansprüchen 5 bis 9, **dadurch gekennzeichnet, dass** das Teil oder die Teile, die zusammenzuschweißen sind, aus Kohlenstoffstahl bestehen.

11. Verfahren nach den Ansprüchen 5 bis 10, **dadurch gekennzeichnet, dass** die Schweißgeschwindigkeit mindestens 2 m/min beträgt.
